# EUROPEAN PATENT SPECIFICATION

(11) **EP 4 072 279 B1**
(45) Date of publication and mention of the grant of the patent: **11.11.2026**
(21) Application number: 20824363.4
(22) Date of filing: 09.12.2020
(51) Int. Cl.: A01K 11/00, G01S 5/02, H04W 4/029, G01C 21/16, G01S 5/00

(54) **METHOD AND SYSTEM FOR TRACKING POSITION OF A LIVESTOCK ANIMAL**
VERFAHREN UND SYSTEM ZUR ORTUNG EINES NUTZTIERS
PROCÉDÉ ET SYSTÈME POUR SUIVRE LA POSITION D'UN ANIMAL D'ÉLEVAGE

(30) Priority: 11.12.2019 SE 1951430
(43) Date of publication of application: 19.10.2022
(73) Proprietor: DeLaval Holding AB, 147 21 Tumba (SE)
(72) Inventor: LILLIEHORN, Tobias, 147 21 Tumba (SE)
(74) Representative: DeLaval International AB
(86) International application number: PCT/SE2020/051187
(87) International publication number: WO 2021/118442

(56) References cited:
- US-A1- 2006 125 644
- US-A1- 2011 298 619
- US-A1- 2012 206 454

## Description

### TECHNICAL FIELD

The invention relates generally to solutions for monitoring livestock animal behaviour, and more specifically to methods and systems for tracking the position of livestock animals.

### BACKGROUND

There is a general interest to obtain information regarding the position of a livestock animal in an area of interest, e.g. in a barn where there is not sufficient coverage of global positioning systems, such as the GPS system.

The livestock animal may be a dairy animal, such as a dairy cow. It can also be other dairy animals such as sheep or goats, or other animals such as beef cattle, etc.

A positioning system can be used to track the position of the livestock animal to determine where she is in the barn, where she spends her time and if her movement around the barn shows a deviation from an otherwise normal behaviour. This could indicate that the animal is in need of special attention, e.g. that the animal may be sick or in heat. If an animal is sick it is important to diagnose her and give suitable treatment. If an animal is in heat she will need to be handled according to appropriate steps, inseminated etc. The tracked position of an animal can also be used to indicate if there are other problems in the herd, such as with low ranked animals not being able to obtain feed etc.

Such positioning systems are known e.g. from WO2006/022548A1, disclosing a system with tags attached to the animals, which tag is provided with a transmitter for transmitting an ultra wideband signal, and a plurality of receivers (or beacons) placed in the barn for receiving the ultra wideband signal. A signal processing device is connected to the receivers for locating the tag on the basis of that ultra wideband signal on the basis of, for instance, delay time and/or reception angle. This kind of system is generally known as a Real Time Locating System (RTLS). Other examples of animal positioning systems can be found in US2012206454A1 and US2011298619A1.

One shortcoming of a RTLS system is that it needs sufficient line of sight between the tag and the beacons to be able to properly locate and follow the position of the animal. In some barns or other areas this is difficult to obtain at all positions of the animal. This means that the position and movement behaviour of the animal is lost during a period of time until line of sight is re-established.

A further concern related to active tags carried by animals is the energy efficiency, since it is sought to have tags with a lifetime of many years.

### SUMMARY

It is an object of the invention to alleviate some of the shortcomings of prior methods and systems for determining position and movement of livestock animals.

According to one aspect of the invention, the object is achieved by a method for tracking position of a livestock animal in an area of interest over a period of time as defined in claim 1. The area of interest may be a barn, or a portion of a barn, for housing livestock animals such as dairy cows, sheep, goats etc. The animals carry a sensor device, which may be an ear tag, a leg sensor, a sensor carried around the neck of the animal or a sensor carried inside the body of the animal. The method comprises:
- obtaining an initial position of the animal,
- obtaining angular velocity data related to the movement of the sensor device, and integrating the angular velocity data over time to represent a relative change in the direction of motion of the animal,
- obtaining acceleration data related to the movement of the sensor device, and integrating the acceleration data twice over time to represent a displacement of the animal, and
- determining the position of the animal after the period of time based on the displacement of the animal from the initial position.

Thereby the position of the animal can be tracked, at least for periods of time, using sensor data obtained by a sensor device, carried or by the animal itself. The initial position is the position of the animal at the start of the period of time. The step of integration and determining the position may be performed locally in the sensor device. By means of such a solution, the communication between the sensor device and an external system for animal position monitoring may be reduced. Further, the position of the animal may be tracked in areas not covered by external beacons. It should be noted that a change in position of the animal should be understood as the animal transporting itself within the area, such as by walking along a movement path. Position in this sense should be understood as the location of the animal in the area of interest. The area of interest may be a barn, or a portion of a barn, for housing livestock animals such as dairy cows, sheep, goats etc.

In addition to the initial position, the initial velocity, acceleration and/or direction of movement may also be obtained and used in the determination of the position.

Acceleration data and position data may be obtained in two (e.g. x and y) or three (e.g. x, y and z) dimensions. Angular velocity data may be provided over one (e.g. z), two or three (e.g. x, y and z) axes. Thus, the determined position may comprise a two- or three-dimensional position vector, from the initial position.

The method may comprise determining a plurality of data points reflecting the position and thus a path of the animal during said period of time. The data points may be time stamped. The path may comprise position data in two or three dimensions for each data point, and possibly direction and velocity data. The time division between the data points may be e.g. 0.1 s, 0.5 s, 1.0 s, 10 s etc.

The acceleration data may be obtained from a sensor device comprising an accelerometer and gyroscope, such as an ear tag, a halter mounted device, a neck band mounted device, a leg mounted device or a bolus. The sensor device may be configured to measure acceleration and angular velocity of the head of the animal, an ear of the animal, a leg of the animal, a distal limb of a leg of the animal and/or the core body of the animal.

The acceleration data may be related to the movement of a distal limb of a leg of the animal, wherein it is detected when the distal limb is in contact with a stationary point, such as the ground, and wherein the velocity is calibrated to zero at this point. Thereby each step of the animal may be used to calibrate the integration of acceleration data. The distal limb of the leg may typically be the hoof or foot of the animal. At a position where the distal limb of the leg is in contact with the ground, the velocity may be set to zero in all directions. Also a z-component of a position vector (x, y, z) may be defined in this point if the level of the ground is known and constant.

Velocity may be calibrated to zero when the acceleration data has been below a threshold for a predetermined period of time. Thereby it can be determined that the animal is essentially not moving, i.e. standing or lying still. The threshold may be set at a level where it discerns actual physical transportation of the animal from other movements of part of the animal body (breathing, eating, ruminating etc.).

The method may include a step of averaging and/or filtering accelerometer data to reduce the influence on repetitive micro movements of the part of the animal monitored, from actual physical transportation of the animal.

The initial position and/or other data related to the movement of the animal may be obtained in the sensor device, and the steps of integration and determining the position may be performed locally in the sensor device. Thus the determining of position and path of movement of the animal may be performed in the sensor device itself.

The method may comprise determining the initial position (and other data) of the animal in relation to a plurality of external, preferably stationary, beacons for which the position is known and determining a change in position over said period of time, from the position obtained from said external beacons (also called base stations).

The beacons may determine the position of the animal (i.e. the sensor device carried by the animal) by means of triangulation, time of flight information or other means known in the art.

The determined position and/or movement path of the animal may be transmitted from the sensor device. Transmission may be performed at predetermined intervals of time. The time intervals may be selected to be 1 second, 10 seconds, 1 minute, 5 minutes, 10 minutes, 30 minutes, etc. The transmission may be coordinated with receipt of position coordinates from an external system, which may be used to calibrate the determined change in position and/or direction of movement. Thus the frequency of communication may be reduced, increasing energy efficiency and improving battery time of the sensor device.

According to one embodiment, the transmission of the determined position of the animal may be performed when it is determined that a stable data connection has been established. Thereby the determining of the position of the animal may be performed during a period where a stable data transmission connection cannot or may not be made. This may be because of issues with line of sight, interference with other transmission signals etc.

The initial position may be obtained in association with a predetermined event. The event may be related to time and/or position of the animal in the area of interest. The event may be a regular event, e.g. happening at regular or otherwise predefined time intervals. The event may be that the animal is visiting a certain location, e.g. a location where it is known that the coverage by beacons is poor.

The event may be a regular event, where the period of time may be a period of time in between obtaining the position of the animal in relation the external beacons. Thereby the position, velocity may be calibrated intermittently with information regarding the position of the animal in relation the beacons. Further, the determined position may be transmitted to the one or more beacons for further processing and use. The period of time may be a predetermined period of time.

The event may be an irregular event. The predetermined event may be a loss of connectivity between the sensor device and one or more of the beacons. The period of time may thus be a period where the connectivity between the animal and one or more of the beacons is lost. Thereby the movement of the animal may be determined and tracked even if there is a loss of contact with the external beacons. Preferably, data related to the determined position or path of transportation of the animal over said period of time may be transmitted (back) to one or more of the beacons when connectivity between the animal and one or more of the beacons is recovered. Thereby the determined movement of the animal can be further processed and used, even if there has been a loss of contact with the external beacons.

The method comprises determining the position of the sensor device in relation to a plurality of beacons (such as three or more) for which the position is known, the method further comprising;
- repeatedly transmitting an identity signal, or any other identity related information, from the sensor device,
- receiving the identity information in the plurality of beacons, and
- upon non-receipt of the identity information in one of the beacons, transmitting a response to the sensor device indicating lost signal, and
- upon receipt of the lost signal response in the sensor device, in the sensor device performing the steps of
   ∘ obtaining an initial position of the animal (from one beacon still in contact with the sensor device),
   ∘ obtaining angular velocity data related to the movement of the sensor device, and integrating the angular velocity data over time to represent a relative change in the direction of motion of the animal,
   ∘ obtaining acceleration data related to the movement of the sensor device, and integrating the acceleration data twice over time to represent a displacement of the animal, and
   ∘ determining the position of the animal after the period of time based on the displacement of the animal from the initial position.

The method may further comprise;
∘ transmitting the determined position, from the sensor device,
∘ receiving the determined position of the sensor device in at least one of the beacons, and

- upon receipt of the signal in all of (or at least three of) the beacons, transmitting a signal to the sensor device indicating recovered signal.

According to another alternative, the method may comprise determining the position of the sensor device in relation to a plurality of beacons for which the position is known, the method comprising steps of
- repeatedly transmitting identity information from the sensor device,
- receiving the identity information in the plurality of beacons, and
- upon non-receipt of the identity information in one of the beacons, transmitting a response to the sensor device indicating lost signal, and
- upon receipt of the lost signal response in the sensor device, in the sensor device performing the steps of
   ∘ obtaining an initial position of the animal (from one beacon still in contact with the sensor device),
   ∘ obtaining angular velocity data related to the movement of the sensor device, and integrating the angular velocity data over time to represent a relative change in the direction of motion of the animal,
   ∘ obtaining acceleration data related to the movement of the sensor device, and integrating the acceleration data twice over time to represent a displacement of the animal, and
   ∘ determining the position of the animal after the period of time based on the relative change in the direction of motion and displacement of the animal from the initial position.
   ∘ storing a plurality of determined position data points of the sensor device, such that in the form of a movement path of the sensor device, then
- upon receipt of the identity information at all of (or at least three of) the beacons, sending a signal to the sensor device indicating recovered signal, and
- sending the plurality of determined position data points from the sensor device to the beacons.

According to another aspect of the invention, the object is achieved by an animal positioning system according to claim 9, the system being for tracking the position of a livestock animal in an area of interest over a period of time, comprising a plurality of beacons for which the position is known and a sensor device carried by the animal, wherein the system is configured to determine an initial position of the sensor device in relation to the plurality of beacons, wherein the sensor device comprises;
- a processing unit
- a receiving unit for receiving information related to the position of the sensor device,
- an accelerometer configured to provide acceleration data related to the movement of the sensor device,
- a gyroscope configured to provide angular velocity data related to the movement of the sensor device, and
- a transmitting unit configured to repeatedly transmit identity information from the sensor device to the plurality of beacons,
- wherein, upon non-receipt of the identity information in one of the beacons, transmitting a response to the sensor device indicating lost signal, and
- upon receipt of the lost signal response, in the sensor device;
   - obtaining angular velocity data related to the movement of the sensor device, and integrating the angular velocity data over time to represent a relative change in the direction of motion of the animal,
   - obtaining acceleration data related to the movement of the sensor device, and integrating the acceleration data twice over time to represent a displacement of the animal, and
   - determining the position of the animal after the period of time based on the relative change in the direction of motion and displacement of the animal from the initial position.

Advantages of the system are as initially described in relation to the method.

The accelerometer is preferably a multi-axis accelerometer, such as a 2D or 3D accelerometer capable of measuring acceleration in two or three dimensions. The gyroscope is preferably a multi-axis gyroscope, such as a 2D or 3D gyroscope capable of measuring angular velocity around two or three axes. The multi-axis gyroscope is configured to determine an orientation of the sensor device in two or three dimensions relative to a fix reference frame. Thus the multi-axis gyroscope produces a spatial description of how the sensor device is rotated. The determined movement of the animal may be represented as a three-dimensional movement vector.

The system further comprises one or more beacons configured to transmit the initial position of the animal to the sensor device. According to one embodiment the system comprises at least three beacons to allow for triangulation of the sensor device. Thereby the position of the sensor device can be determined as long as the beacons have contact with the device.

The tracking system may be a RTLS system where the beacons are used to locate the sensor device in real time. An energy consuming step in a RTLS positioning system is the establishment of transmission between the animal tags and the beacons. Transmission of data is a major source of depletion of the batteries comprised in the tags. Therefore it is advantageous to reduce the communication frequency while still being able to obtain the position or transportation path of the animal between the periods of communication.

The sensor device may further comprise a transmitting unit configured to transmit the determined movement of the animal to the external beacons. Thereby, any movement determined by the sensor device can be communicated to the beacons for further use and/or processing. The sensor device may be configured to transmit the data over a radio link, such as ultra wideband radio or NFC, Wi-Fi, Bluetooth, Bluetooth LE etc. The radio technology can be selected to communicate only over a limited range around each beacon, to allow proximity coincidence detection, or to cover more or less the whole area where the livestock animals are kept.

The sensor device may be one of an ear tag, a halter or neck collar, a leg collar and a bolus. Thus it may be attached to the animal using conventional technology, and used to detect the movements of the animal.

The system may further be configured to perform the various steps of the method as disclosed herein.

According to yet another aspect, not forming part of the invention, the object is achieved by a computer program comprising instructions which, when executed on at least one processor, cause the at least one processor to carry out actions associated with the method as disclosed herein.

According to yet another aspect, not forming part of the invention, the object is achieved by a carrier containing the computer program as disclosed, wherein the carrier is one of an electronic signal, optical signal, radio signal, or computer readable storage medium.

### BRIEF DESCRIPTION OF DRAWINGS

The invention is now to be explained more closely by means of preferred embodiments, which are disclosed as examples, and with reference to the attached drawings.
Figure 1 shows a livestock animal (a dairy cow) with sensor devices attached.
Figure 2 shows a sensor device according to one embodiment of the invention.
Figure 3 and 4 show an example of an area for livestock animals, wherein the position of the animals may be tracked.
Figure 5 shows a method for tracking position of a livestock animal.
Figure 6 shows another method for tracking position of a livestock animal.

### DETAILED DESCRIPTION

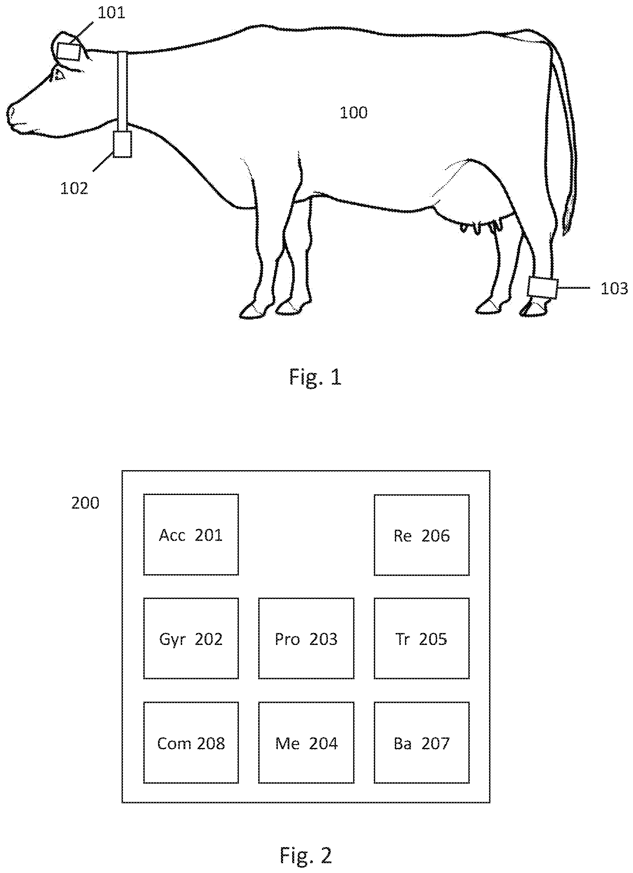

Figure 1 shows several examples of how a sensor device as described herein may be attached and carried by a livestock animal. The animal 100 is a dairy cow, but it is conceived that the animal can be e.g. a beef cattle, sheep, goat etc. According to a first alternative the sensor device is an ear tag 101, attached to the ear of the animal. According to a second alternative the sensor device is carried around the neck of the animal, in the form of a neck or halter collar 102. According to a further alternative the sensor device is carried around one of the legs of the animal, in the form of a leg collar. Other alternatives are also possible as long as the device can detect the motion of the animal, such as a bolus or implant.

Figure 2 shows an example of a sensor device 200. The device is in the form of a case which is sturdy enough to withstand rough handling by the animal. The device comprises an accelerometer 201 and a gyroscope 202. The accelerometer 201 is a multi-axis accelerometer, preferably a 2D or 3D accelerometer capable of measuring acceleration in two or three dimensions. The multi-axis accelerometer is configured to determine an acceleration of the sensor device in two or three dimensions relative to a fix reference frame. The gyroscope 202 is preferably a multi-axis gyroscope, such as a 2D or 3D gyroscope capable of measuring angular velocity around two or three axes. The multi-axis gyroscope is configured to determine an orientation of the sensor device in two or three dimensions relative to a fix reference frame. The device may also comprise a multi axis compass 208, preferably a 2D or 3D compass capable of measuring the magnetic field in two or three dimensions.

The device 200 further comprises a processing unit 203 and a memory unit 204. The processing unit is configured to obtaining information from the accelerometer 201 and the gyroscope 202 and process that information to determine the position of the animal. The device preferably contains an electrical energy source 207 such as a suitable battery. The energy source may preferably be dimensioned to enable the sensor device to function over a long period of time, such as one to several years.

The device may further comprise a transmitting unit 205 for transmitting information related to the determined position of the animal, and a receiving unit 206 for receiving information related to the position of the sensor device.

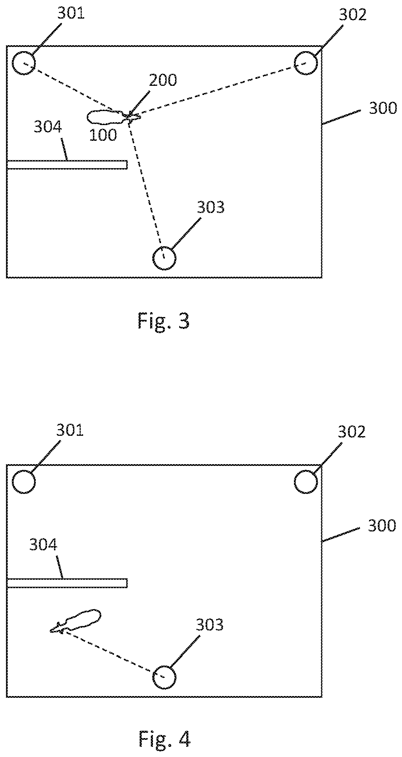

Turning to Figure 3, an animal carrying a sensor device 200 is depicted in an area 300, which is used for housing livestock animals. Typically the area is a barn or another defined and possibly enclosed area where one or more animals are kept. Also, in this area an obstacle 304 for electromagnetic radiation, in the form of a wall, is shown.

In direct connection with the area, three beacons 301, 302 and 303 are provided at specific and well known positions. The beacons and the sensor device are configured to communicate over a radio link. Information from the sensor device is received by the beacons 301, 302 and 303. If there are a plurality of animals, each carrying an individual sensor device, information regarding the identity of the device is transmitted from the sensor device e.g. by identification data or by communication in individual time slots.

According to Figure 3, the position tracking system may determine the position of the sensor device e.g. by triangulation of the information received by the three beacons. However, looking at Figure 4, the animal has now moved into a position where the communication between the sensor device 200 and two of the beacons 301 and 302 are interfered because of the obstacle 304. It is noted that problems with communication between the sensor device and one or more beacons may be because of the form of the area where the animals are kept, because of one or more obstacles in the area where the animals are kept, because of interference with other transmitted signals and so on. Thus, in the example shown the system can no longer determine the position of the animal based on information received at the three beacons.

In the example shown the system identifies that the beacons 301 and 302 have lost contact with the sensor device 200. Thus a loss-of-contact signal is transmitted from the system to the sensor device. This signal may be transmitted by all the beacons or by one beacon 303 still in contact with the sensor device. The last known position and orientation of the sensor device is stored for reference, and may be transmitted to the sensor device.

The sensor device obtains the loss-of-contact signal from the beacon 303. Acceleration data related to the movement of the sensor device and angular velocity data related to the movement of the sensor device is obtained from the accelerometer and gyroscope.

The obtained angular velocity data is integrated over time to obtain an orientation of the sensor device, and the acceleration data is integrated twice over time to obtain a change in position of the animal. Thus the position of the animal can be determined locally in the sensor device.

According to one example the determined position of the animal is transmitted to the beacon 303 to update the positioning system with information on the location of the animal. This beacon is still in contact with the sensor device.

The local determination of the position of the animal is performed until the contact with the remaining beacons 301,302, is recovered.

According to one alternative the determined position of the animal is stored in the sensor device as a movement path comprising a plurality of data points of position of the animal, and the movement path is transmitted only when the contact with the remaining beacons 301,302, is recovered.

According to yet another alternative as explained in relation to Figure 3, the transmission frequency in the positioning system may be decreased by intermittently obtaining the position of the animal using the beacons and in-between those moments, determining the movement path of the animal internally in the sensor device. During a transmission sequence with the beacons an initial position of the animal is obtained by means of a step of communication between the sensor device and the beacons as initially described. Thereafter acceleration data and angular velocity data related to the movement of the sensor device is obtained from the accelerometer and gyroscope within the sensor device, and used to determine a movement path of the animal until the next moment of communication with the beacons. During communication the movement path of the animal during the previous period is transmitted and a new actual location of the animal is obtained from the beacons. Thus the velocity and position drift of the internal positioning is controlled, and the transmission frequency may be decreased in the system. Typical transmission intervals may be 1 second, 10 seconds, 1 minute etc. According to one alternative, the movement path of a time period is only transmitted upon request from the beacons. Thus the amount of data transferred might be further reduced.

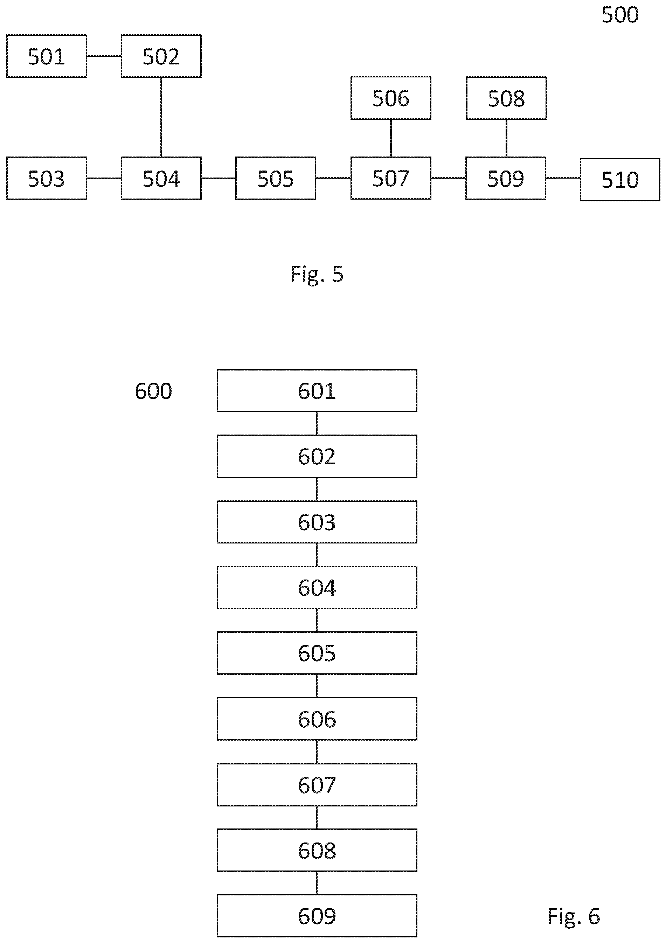

Turning to Figure 5, a method of determining position of a livestock animal over a period of time is shown. The method comprises obtaining 501 angular velocity data related to the position of the animal over said period of time, and integrating 502 the angular velocity data over time to obtain an orientation of the animal relative to a global frame of reference.

Acceleration data related to the movement of the animal is obtained 503, and is projected onto the axes of the global frame of reference using the orientation as determined 502.

Based on the orientation relative to the global frame of reference, the acceleration data is compensated for gravitation, 505. Thereafter the acceleration data is integrated 507 over time to obtain the change in velocity. The change in velocity in view of the initial velocity 506 results in the velocity as determined. The velocity is integrated over time 509 to obtain a change in position of the device. Using the initial position 508 as a starting point the movement of the animal is then determined 510.

The global frame of reference can be defined as by three orthogonal axes x, y and z. The body (b) of the sensor device has its own body frame of reference bx, by, bz.

The orientation of the body of the animal relative to the global frame of reference is tracked by integrating 502 the angular velocity signal of the body (b) of the sensor device, ω_{b}(t) = (ω_{bx}(t),ω_{by}(t),ω_{bz}(t))^{T} obtained 501 from the gyroscope.

The direction of the body frame relative to the global frame may be specified by a 3×3 rotation matrix C, in which each column is a unit vector along one of the body axes specified in terms of the global axes.

To track the position of the body (b) of the sensor device the acceleration signal a_{b}(t) = (a_{bx}(t), a_{by}(t), a_{bz}(t))^{T} obtained 503 from the accelerometers is projected 504 into the global frame of reference. This is done using the rotation matrix C as obtained from the result of the gyroscopes, a_{g}(t) = C(t)a_{b}(t). Acceleration due to gravity is then subtracted 505 and the remaining acceleration is integrated 507 once to obtain velocity, and once again 509 to obtain position displacement.

In one embodiment, the direction of the body frame relative to the global frame may be calculated by magnetic field strength signals obtained from the multi axis compass, which can be used to give a more accurate orientation determination and reduce drift.

The resulting system is thus able to track the positon of the animal in two or three dimensions, and at the same time captures the motion behaviour (accelerometer and gyroscope data).

If not of interest, the micro movements of the sensor device, such as movement of the ear of the animal, may be removed by the integration of acceleration in two steps to obtain a change in position of the animal body over time. The information from the sensors may also be filtered to reduce signals that are not of interest for the position determination.

In Figure 6 a method 600 of tracking the position of a livestock animal is shown. According to the method there one or more livestock animals located in an area where three or more beacons are arranged at well-defined positons locate sensor devices carried by the animals. According to the method, the sensor device transmits 601 a signal to indicate its position to the plurality of beacons, which signal is received 602 in the beacons and used to determine the position of the sensor device relative to the beacons. The signal contains identity information regarding the sensor device, or the identity information is included in the signal by the communication being made in a dedicated time slot or frequency band etc.

Upon a failure to receive the signal in at least one of the beacons, and where the information from remaining beacons is not sufficient to determine the location of the sensor device, sending a response 603 to from the beacons to the sensor device indicating lost signal.

The lost signal response is received 604 in the sensor device, from at least one of the beacons still in contact with the device. Upon receipt of that signal, a local tracking of the position of the animal is initiated 605 in the device. The initial position may be obtained from at least one of the beacons still in contact with the device. Angular velocity and acceleration data related to the movement of the sensor device are obtained. The angular velocity data is integrated over time to obtain an orientation of the device, and the acceleration data is integrated twice over time to obtain a change in position of the animal. Based on the change in orientation and displacement the position of the animal is determined 606. According to one alternative the determined position of the sensor device is then transmitted 607, from the sensor device and received in at least one of the beacons having contact with the device. Finally, upon a restored receipt of the identity information at all of the beacons, a signal is sent 608 from the beacons to the sensor device indicating recovered signal. Following receipt 609 of this indication, the local tracking of position of the animal by the sensor device may be discontinued.

According to one alternative method, the determined position of the animal is collected and stored in the sensor device as a movement path, and the movement path is transmitted to the beacons once the contact between the sensor device and all relevant beacons needed to determine the position is restored. Thus, when the communication between the sensor device and the beacons is reduced such that the beacons no longer can determine the position, e.g. because of problems with line of sight, the position during the "invisible" period may be calculated locally in the sensor device using inertial positioning from the last known position of the sensor device. The resulting movement path of the animal when out of sight may be communicated to the beacons when line of sight is re-established.

The method may comprise a step of zero velocity update if acceleration is below a threshold for a certain period of time. This is interpreted as the animal standing or lying still, whereby the velocity of the movement of the animal can be calibrated to zero.

All of the process steps, as well as any sub-sequence of steps, as described herein may be controlled by means of a programmed processor. Moreover, although the embodiments of the invention described above with reference to the drawings comprise processor and processes performed in at least one processor, the disclosure also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/Versatile Disk), a CD (Compact Disc) or a semi-conductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal which may be conveyed directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The invention is not restricted to the described embodiments in the figures, but may be varied freely within the scope of the claims.

## Claims

1. A method (600) for tracking position of a livestock animal in an area of interest over a period of time, the animal carrying a sensor device, the method comprising;
- determining the position of the sensor device in relation to a plurality of beacons of an animal positioning system, for which the position is known, thereby obtaining an initial position of the animal in relation to the plurality of beacons,
- repeatedly transmitting (601) identity information from the sensor device,
- receiving (602) the identity information in the plurality of beacons,
**characterized in that**
- upon non-receipt of the identity information in one of the beacons, transmitting (603) a response to the sensor device indicating lost signal, and
- upon receipt (604) of the lost signal response, in the sensor device;
- obtaining (501) angular velocity data related to the movement of the sensor device, and integrating (502) the angular velocity data over time to represent a relative change in the direction of motion of the animal,
- obtaining (503) acceleration data related to the movement of the sensor device, and integrating (507, 509) the acceleration data twice over time to represent a displacement of the animal, and
- determining (510) the position of the animal after the period of time based on the relative change in the direction of motion and displacement of the animal from the initial position.

2. The method according to claim 1 wherein the steps of integration and determining the position is performed locally in the sensor device, and wherein the determined position is transmitted from the sensor device.

3. The method according to claim 1 or 2 comprising determining a plurality of data points reflecting the position and thus a movement path of the animal during said period of time.

4. The method according to any one of the preceding claims wherein the initial position is transmitted to the sensor device from the animal positioning system.

5. The method according to any one of the preceding claims wherein the initial position is obtained in association with a predetermined event.

6. The method according to claim 5 wherein the predetermined event is a loss of connectivity between the sensor device and one or more of the beacons.

7. The method according to any one of the preceding claims further comprising;
- transmitting the determined position, from the sensor device,
- receiving the determined position of the sensor device in at least one of the beacons, and
- upon receipt of the identity information in all of (or at least three of) the beacons, transmitting a signal to the sensor device indicating recovered signal.

8. The method according to any one of claims 1 to 6 further comprising;
- storing a plurality of determined position data points of the sensor device, such that in the form of a movement path of the sensor device, then
- upon receipt of the identity information at all of (or at least three of) the beacons, sending a signal to the sensor device indicating recovered signal, and
- sending the plurality of determined position data points from the sensor device to the beacons.

9. An animal positioning system for tracking the position of a livestock animal in an area of interest (300) over a period of time, comprising a plurality of beacons (301, 302, 303) for which the position is known and a sensor device (200) carried by the animal, wherein the system is configured to determine an initial position of the sensor device in relation to the plurality of beacons, wherein the sensor device comprises;
- a processing unit (203),
- a receiving unit (206) for receiving information related to the position of the sensor device,
- an accelerometer (201) configured to provide acceleration data related to the movement of the sensor device,
- a gyroscope (202) configured to provide angular velocity data related to the movement of the sensor device, and
- a transmitting unit (205) configured to repeatedly transmit identity information from the sensor device, to the plurality of beacons,
**characterized in that**
- upon non-receipt of the identity information in one of the beacons, the system is configured to transmit a response to the sensor device indicating lost signal, wherein
- upon receipt of the lost signal response by the receiving unit in the sensor device the processing unit is configured to integrate the angular velocity data over time to represent a relative change in the direction of motion of the animal, to integrate the acceleration data twice over time to represent a displacement of the animal, and to determine the position of the animal after the period of time based on the relative change in the direction of motion and displacement of the animal, from the initial position.

10. The system according to claim 9 wherein one or more of the beacons are configured to determine the position of the sensor device relative to the beacons and to transmit the initial position of the animal to the sensor device.

11. The system according to claim 9 or 10 wherein transmitting unit is further configured to transmit the determined position of the animal to the one or more beacons.

## Patentansprüche

1. Verfahren (600) zum Verfolgen einer Position eines Nutztieres in einem Bereich von Interesse über eine Zeitspanne, wobei das Tier eine Sensorvorrichtung trägt, das Verfahren umfassend;
- Bestimmen der Position der Sensorvorrichtung in Bezug auf eine Vielzahl von Baken eines Tierpositionierungssystems, für die die Position bekannt ist, wobei dadurch eine Ausgangsposition des Tieres in Bezug auf die Vielzahl von Baken erhalten wird,
- wiederholtes Übertragen (601) von Identitätsinformationen von der Sensorvorrichtung,
- Empfangen (602) der Identitätsinformationen in der Vielzahl von Baken,
**gekennzeichnet durch**
- bei Nichtempfang der Identitätsinformationen in einer der Baken, Übertragen (603) einer Antwort an die Sensorvorrichtung, die ein verlorenes Signal anzeigt, und
- bei Empfang (604) der Antwort über das verlorene Signal in der Sensorvorrichtung;
- Erhalten (501) von Winkelgeschwindigkeitsdaten, die sich auf die Bewegung der Sensorvorrichtung beziehen, und Integrieren (502) der Winkelgeschwindigkeitsdaten im Laufe der Zeit, um eine relative Änderung in der Laufrichtung des Tieres darzustellen,
- Erhalten (503) von Beschleunigungsdaten, die sich auf die Bewegung der Sensorvorrichtung beziehen, und zweimaliges Integrieren (507, 509) der Beschleunigungsdaten im Laufe der Zeit, um eine Verschiebung des Tieres darzustellen, und
- Bestimmen (510) der Position des Tieres nach der Zeitspanne basierend auf der relativen Änderung in der Laufrichtung und der Verschiebung des Tieres von der Ausgangsposition.

2. Verfahren nach Anspruch 1, wobei die Schritte einer Integration und des Bestimmens der Position in der Sensorvorrichtung lokal durchgeführt werden und wobei die bestimmte Position von der Sensorvorrichtung übertragen wird.

3. Verfahren nach Anspruch 1 oder 2, umfassend das Bestimmen einer Vielzahl von Datenpunkten, die die Position und somit einen Bewegungspfad des Tieres während der Zeitspanne wiedergeben.

4. Verfahren nach einem der vorstehenden Ansprüche, wobei die Ausgangsposition an die Sensorvorrichtung von dem Tierpositionierungssystem übertragen wird.

5. Verfahren nach einem der vorstehenden Ansprüche, wobei die Ausgangsposition in Verbindung mit einem vorbestimmten Ereignis erhalten wird.

6. Verfahren nach Anspruch 5, wobei das vorbestimmte Ereignis ein Konnektivitätsverlust zwischen der Sensorvorrichtung und einer oder mehreren der Baken ist.

7. Verfahren nach einem der vorstehenden Ansprüche, ferner umfassend;
- Übertragen der bestimmten Position von der Sensorvorrichtung,
- Empfangen der bestimmten Position der Sensorvorrichtung in mindestens einer der Baken und
- bei Empfang der Identitätsinformationen in allen (oder mindestens drei) der Baken, Übertragen eines Signals an die Sensorvorrichtung, das ein wiederhergestelltes Signal anzeigt.

8. Verfahren nach einem der Ansprüche 1 oder 6, ferner umfassend;
- derartiges Speichern einer Vielzahl von bestimmten Positionsdatenpunkten der Sensorvorrichtung, dass in der Form eines Bewegungspfads der Sensorvorrichtung, dann
- bei Empfang der Identitätsinformationen in allen (oder mindestens drei) der Baken, Senden eines Signals an die Sensorvorrichtung, das ein wiederhergestelltes Signal anzeigt, und
- Senden der Vielzahl von bestimmten Positionsdatenpunkten von der Sensorvorrichtung an die Baken.

9. Tierpositionierungssystem zum Verfolgen der Position eines Nutztieres in einem Bereich von Interesse (300) über eine Zeitspanne, umfassend eine Vielzahl von Baken (301, 302, 303), für die die Position bekannt ist, und eine von dem Tier getragene Sensorvorrichtung (200), wobei das System konfiguriert ist, um eine Ausgangsposition der Sensorvorrichtung in Bezug auf die Vielzahl von Baken zu bestimmen, wobei die Sensorvorrichtung umfasst;
- eine Verarbeitungseinheit (203),
- eine Empfangseinheit (206) zum Empfangen von Informationen, die sich auf die Position der Sensorvorrichtung beziehen,
- einen Beschleunigungsmesser (201), der konfiguriert ist, um Beschleunigungsdaten bereitzustellen, die sich auf die Bewegung der Sensorvorrichtung beziehen,
- ein Gyroskop (202), das konfiguriert ist, um Winkelgeschwindigkeitsdaten bereitzustellen, die sich auf die Bewegung der Sensorvorrichtung beziehen, und
- eine Übertragungseinheit (205), die konfiguriert ist, um Identitätsinformationen von der Sensorvorrichtung an die Vielzahl von Baken wiederholt zu übertragen,
**dadurch gekennzeichnet, dass**
- bei Nichtempfang der Identitätsinformationen in einer der Baken, das System konfiguriert ist, um eine Antwort an die Sensorvorrichtung zu übertragen, die ein verlorenes Signal anzeigt, wobei
- bei Empfang der Antwort über das verlorene Signal durch die Empfangseinheit in der Sensorvorrichtung, die Verarbeitungseinheit konfiguriert ist, um die Winkelgeschwindigkeitsdaten im Laufe der Zeit zu integrieren, um eine relative Änderung in der Laufrichtung des Tieres darzustellen, um die Beschleunigungsdaten zweimal im Laufe der Zeit zu integrieren, um eine Verschiebung des Tieres darzustellen, und um die Position des Tieres nach der Zeitspanne basierend auf der relativen Änderung in der Laufrichtung und der Verschiebung des Tieres von der Ausgangsposition zu bestimmen.

10. System nach Anspruch 9, wobei eine oder mehrere der Baken konfiguriert sind, um die Position der Sensorvorrichtung relativ zu den Baken zu bestimmen und die Ausgangsposition des Tieres an die Sensorvorrichtung zu übertragen.

11. System nach Anspruch 9 oder 10, wobei die Übertragungseinheit ferner konfiguriert ist, um die bestimmte Position des Tieres an die eine oder die mehreren Baken zu übertragen.

## Revendications

1. Procédé (600) permettant de suivre la position d'un animal d'élevage dans une zone d'intérêt sur un laps de temps, l'animal portant un dispositif de détection, le procédé comprenant ;
- la détermination de la position du dispositif de détection par rapport à une pluralité de balises d'un système de positionnement d'animaux, pour lesquelles la position est connue, permettant ainsi d'obtenir une position initiale de l'animal par rapport à la pluralité de balises,
- la transmission répétée (601) d'informations d'identité à partir du dispositif de détection,
- la réception (602) des informations d'identité dans la pluralité de balises,
**caractérisé en ce que**
- lors de la non-réception des informations d'identité dans l'une des balises, la transmission (603) d'une réponse au dispositif de détection indiquant un signal perdu, et
- lors de la réception (604) de la réponse de signal perdu, dans le dispositif de détection ;
- l'obtention (501) de données de vitesse angulaire liées au mouvement du dispositif de détection, et l'intégration (502) des données de vitesse angulaire au cours du temps pour représenter un changement relatif de la direction de mouvement de l'animal,
- l'obtention (503) de données d'accélération liées au mouvement du dispositif de détection, et l'intégration (507, 509) des données d'accélération deux fois au cours du temps pour représenter un déplacement de l'animal, et
- la détermination (510) de la position de l'animal après le laps de temps sur la base du changement relatif de la direction de mouvement et du déplacement de l'animal par rapport à la position initiale.

2. Procédé selon la revendication 1, dans lequel les étapes d'intégration et de détermination de la position sont effectuées localement dans le dispositif de détection, et dans lequel la position déterminée est transmise à partir du dispositif de détection.

3. Procédé selon la revendication 1 ou 2, comprenant la détermination d'une pluralité de points de données reflétant la position et donc une trajectoire de mouvement de l'animal pendant ledit laps de temps.

4. Procédé selon l'une quelconque des revendications précédentes, dans lequel la position initiale est transmise au dispositif de détection à partir du système de positionnement d'animal.

5. Procédé selon l'une quelconque des revendications précédentes, dans lequel la position initiale est obtenue en association avec un événement prédéterminé.

6. Procédé selon la revendication 5, dans lequel l'événement prédéterminé est une perte de connectivité entre le dispositif de détection et une ou plusieurs des balises.

7. Procédé selon l'une quelconque des revendications précédentes, comprenant en outre ;
- la transmission de la position déterminée, à partir du dispositif de détection,
- la réception de la position déterminée du dispositif de détection dans au moins l'une des balises, et
- lors de la réception des informations d'identité dans l'ensemble des balises (ou au moins trois d'entre elles), la transmission d'un signal au dispositif de détection indiquant un signal récupéré.

8. Procédé selon l'une quelconque des revendications 1 à 6, comprenant en outre ;
- le stockage d'une pluralité de points de données de position déterminés du dispositif de détection, de manière à former une trajectoire de mouvement du dispositif de détection, puis
- lors de la réception des informations d'identité au niveau de l'ensemble des balises (ou au moins trois d'entre elles), l'envoi d'un signal au dispositif de détection indiquant un signal récupéré, et
- l'envoi de la pluralité de points de données de position déterminés du dispositif de détection aux balises.

9. Système de positionnement d'animal permettant de suivre la position d'un animal d'élevage dans une zone d'intérêt (300) sur un laps de temps, comprenant une pluralité de balises (301, 302, 303) pour lesquelles la position est connue et un dispositif de détection (200) porté par l'animal, dans lequel le système est configuré pour déterminer une position initiale du dispositif de détection par rapport à la pluralité de balises, dans lequel le dispositif de détection comprend ;
- une unité de traitement (203),
- une unité de réception (206) permettant de recevoir des informations relatives à la position du dispositif de détection,
- un accéléromètre (201) configuré pour fournir des données d'accélération relatives au mouvement du dispositif de détection,
- un gyroscope (202) configuré pour fournir des données de vitesse angulaire liées au mouvement du dispositif de détection, et
- une unité de transmission (205) configurée pour transmettre de manière répétée des informations d'identité à partir du dispositif de détection, à la pluralité de balises,
**caractérisé en ce que**
- lors de la non-réception des informations d'identité dans l'une des balises, le système est configuré pour transmettre une réponse au dispositif de détection indiquant un signal perdu, dans lequel
- lors de la réception de la réponse de signal perdu par l'unité de réception dans le dispositif de détection, l'unité de traitement est configurée pour intégrer les données de vitesse angulaire au cours du temps pour représenter un changement relatif de la direction de mouvement de l'animal, pour intégrer les données d'accélération deux fois au cours du temps pour représenter un déplacement de l'animal, et pour déterminer la position de l'animal après le laps de temps sur la base du changement relatif de la direction de mouvement et du déplacement de l'animal, à partir de la position initiale.

10. Système selon la revendication 9, dans lequel une ou plusieurs des balises sont configurées pour déterminer la position du dispositif de détection par rapport aux balises et pour transmettre la position initiale de l'animal au dispositif de détection.

11. Système selon la revendication 9 ou 10, dans lequel l'unité de transmission est en outre configurée pour transmettre la position déterminée de l'animal à la ou aux balises.
